# EUROPÄISCHE PATENTSCHRIFT

(11) **EP 0 649 597 B1**
(45) Veröffentlichungstag und Bekanntmachung des Hinweises auf die Patenterteilung: **03.03.1999**
(21) Anmeldenummer: 94116549.0
(22) Anmeldetag: 20.10.1994
(51) Int. Cl.: A23G 1/26, A23G 3/02, A23G 3/20

(54) **Eintafelanlage für Schokolade oder ähnliche Erzeugnisse**
Installation for manufacturing chocolate bars or similar products
Installation pour fabriquer des tablettes de chocolat ou des produits similaires

(30) Priorität: 21.10.1993 IT MI932236
(43) Veröffentlichungstag der Anmeldung: 26.04.1995
(73) Patentinhaber: CARLE & MONTANARI S.p.A., 20141 Milano (IT)
(72) Erfinder: Cerboni, Renzo, I-20146 Milano (IT)
(74) Vertreter: Mayer, Hans Benno, Dipl.-Ing.

(56) Entgegenhaltungen:
- EP-A- 0 039 514

## Beschreibung

Die vorstehende Erfindung betrifft eine Eintafelanlage fuer Schokolade oder aehnliche Erzeugnisse.

Es sind aus dem Stand der Technik Eintafelanlagen fuer Schokolade oder aehnliche Produkte bekannt geworden. Diese Anlagen bestehen ueblicherweise aus waagerecht angeordneten Fuehrungsbahnen, auf denen Giessbleche verschoben werden.

Die Giessbleche haben im wesentlichen rechteckige Form und weisen Hohlraeume auf, in die z.B. fluessige Schokolade dosiert eingespritzt wird.

Entlang den Foerderbahnen fuer die Giessbleche, Foerderbahnen die auch Laengen in einer Groessenordnung von mehreren 100 m aufweisen koennen, sind Kuehleinrichtungen vorgesehen, die die Aufgabe haben, ein Aushaerten der Schokolade in den Giessblechen zu bewirken. Des weiteren ist die bekannte Anlage mit Wendevorrichtungen ausgeruestet, mit denen es moeglich ist, die Giessbleche um 180° zu drehen. Diese Wendebewegung der Giessbleche wird vor dem Entleerungsvorgang durchgefuehrt. Es sind ferner Vorrichtungen zum Anwaermen der Giessbleche sowie Ausschlageinrichtungen vorgesehen, die direkt auf das Giessblech einwirken. Ferner ist die Eintafelanlage ueblicherweise mit Reinigungseinrichtungen zum Saeubern der Giessbleche ausgeruestet, um nach dem Ausschlagen der fertigen Schokoladenerzeugnisse das gereinigte Giessblech erneut in den Kreislauf der Giessanlage einzuschleusen.

Bei den bekannten Giessanlagen erfolgt der Transport der Giessbleche unter Zuhilfenahme von Transportketten, die abstehende Vorschubanschlaege aufweisen und sich entlang von Fuehrungsbahnen bewegen, um den Transport der Giessbleche durch Anlage an den Anschlaegen zu ermoeglichen.

Seit langer Zeit hat sich der Transport der Giessbleche unter Zuhilfenahme von Ketten als nachteilig erwiesen, und die technische Ausgestaltung dieser mit Ketten ausgeruesteten Transporteinrichtungen hat sich als ausserordentlich aufwendig erwiesen.

So ist es beispielsweise zum Antrieb der bekannten Mitnehmerketten erforderlich, Reduziergetriebe, Uebertragungswellen, Kardangelenke und Verschiebeinrichtungen, z.B. unter Einsatz eines Malteserkreuzes, vorzusehen.

Die Vielzahl der unterschiedlichen Einrichtungen ist entlang der Anlage, die erhebliche Laenge aufweisen kann, anzuordnen. Daraus folgt, dass sowohl die Montage als auch die Synchronisierung dieser Hilfsvorrichtungen als auch deren Instandhaltung erhebliche Kosten mit sich bringt.

Bewegt man die Giessbleche unter Zuhilfenahme von Ketten, die mit abstehenden Mitnehmern ausgeruestet sind, so kann festgestellt werden, dass die Vorschubgeschwindigkeit der Giessbleche nicht allzu hoch gewaehlt werden kann, da eine zu hohe Vorschubgeschwindigkeit die Giessbleche einer erheblichen Beschleunigung oder einem Abbremsvorgang aussetzen wuerde, die zu einem Abloesen der Giessbleche von den abstehenden Mitnehmern fuehren wuerde, was die gewuenschte Fuehrung sowie die lagemaessig genaue Zuordnung zwischen Giessblech und Mitnehmern zunichte machen wuerde.

Die genannte lagemaessige Zuordnung muss aber in einer Eintafelanlage aeusserst genau beibehalten werden, um ein sicheres Arbeiten der Eintafelanlage zu gewaehrleisten, besonders was die Synchronisierung mit anderen Arbeitseinheiten anbetrifft.

So wurden bereits Versuche unternommen, die technischen Maengel, die bei einer zu hohen Beschleunigung oder Abbremsung eintreten, dadurch zu beheben, dass fuer die Giessbleche Fuehrungsschienen vorgesehen wurden, die sich durch einen sehr hohen Reibungskoeffizienten auszeichneten.

In diesem Fall war es aber unumgaenglich, nicht nur eine hoehere elektrische Leistung aufzubringen, sondern es traten auch noch starke Abnuetzungserscheinungen an den mechanischen Bauteilen auf.

Bei Verwendung von Transportketten zum Transportieren der Giessbleche in einer Eintafelanlage ist zudem eine variierende Laengenaenderung der Antriebsketten festzustellen, Laengenaenderung, die sowohl von nicht ausgleichbarer Waermedehnung der Kette als auch von Verschleisserscheinungen der Bauteile der Kette herruehren.

Daraus ergibt sich, dass die Giessformen eine nicht praezise Lage gegenueber den einzelnen Zusatzeinrichtungen, die der Eintafelanlage zugeordnet sind, einnehmen, wie z.B. gegenueber der Giesseinrichtung, die zum Fuellen der Formhhohlraeume mit fluessiger Schokolade vorgesehen ist.

Aufgrund einer ungenauen Lageanordnung zwischen den einzelnen Bauteilen stellt sich haeufig ein erheblicher Produktionsausschuss aufgrund nicht einwandfrei eingefuellter Erzeugnisse ein, oder aber es wird ein Erzeugnis hergestellt, das mindere Qualitaet aufweist.

Ein weiterer Nachteil, der fuer bekannte Eintafelanlagen, in denen die Giessbleche mittels Foerderketten bewegt werden, typisch ist, ist darin zu sehen, dass es notwendig ist, die Kettenstraenge und die dazugehoerenden Antriebskettenraeder laufend zu schmieren. Es tritt dabei die Gefahr einer Verseuchung der in den Giessblechen enthaltenen Erzeugnisses auf, denn die Foerderketten sind ueblicherweise in unmittelbarer Naehe der Giessbleche und somit in unmittelbarer Naehe des zu fertigenden Erzeugnisses angeordnet. Daher kann das Schmiermittel ungehindert auf verschiedenen Wegen wandern bis es das Schokoladenerzeugnis erreicht, das aufgrund der Verschmutzung eine Qualitaetsminderung oder Verseuchung erleidet. Beruecksichtigt man ferner, dass jede Eintafelanlage mehrere 100 m dieser Antriebsketten benoetigt, so ist erkennbar, dass in einer derartigen Anlage auch ein staendiges Einstellen und Justieren der Steuereinrichtungen fuer Fuehrungs- und Synchronisationseinrichtungen erforderlich wird, da die nicht vermeidbaren Laengenaenderungen der Ketten ein sicheres Arbeiten dieser Bauteile in Frage stellt. All dies wirkt sich negativ auf die Automatisierungsmoeglichkeiten der gesamten Anlage aus.

Das Vorhandensein von Transportketten in den bekannten Eintafelanlagen ist ferner Ursache fuer eine staendige Verschmutzung und Verseuchung der gesamten Anlage, da ueber die Foerderketten eine Verteilung von Schokoladenteilchen ueber die gesamte Erstreckung der Eintafelanlage erfolgt.

Aufgrund des technischen Aufbaus einer Kette sowie der Ausbildung der verschiedenen Antriebsorgane und Synchronisiereinrichtungen sind kontinuierliche Reinigungsvorgaenge waehrend des Betriebes der Eintafelanlage praktisch nicht moeglich. Dies auch aufgrund der Tatsache, dass zur Amortisierung der nicht zu unterschaetzenden Kosten solcher Schokoladen-Eintafelanlagen, die Anlage intensiv genuetzt und taeglich in mehreren Schichten gefahren werden muss.

Ein Stillegen der Anlage zum Durchfuehren von Reinigungsarbeiten (abgesehen von den auftretenden technischen Schwierigkeiten bei der Durchfuehrung dieser Reinigungsarbeiten) wuerde zu erheblichen Kosten fuehren. Schliesslich hat es sich auch als Nachteil in den bekannten Anlagen herausgestellt, dass die verwendeten Antriebsketten, die erhebliche Laenge aufweisen, nach einer gewissen Betriebszeit derartige Abnuetzungserscheinungen aufweisen, dass ein Austausch der Ketten erforderlich wird, was zu einem laengeren Stillstand der Maschine und zu erheblichen Kosten fuehrt. Ein weiterer Nachteil der Eintafelanlagen, in denen die Giessbleche unter Zuhilfenahme von Foerderketten bewegt werden, ist darin zu sehen, dass es nicht einfach ist, die Giessbleche in unterschiedlichen, horizontalen Richtungen, d.h. Vorwaertsantrieb oder Rueckwaertsantrieb, links gerichtete Bewegung oder rechts gerichtete Bewegung sowie Auf- oder Abwaertsbewegung in einer vertikalen Ebene, anzutreiben.

Dieses Tatsache erschwert eine Anpassung an unterschiedliche technische Beduerfnisse moderner Eintafelverfahren; des weiteren ist es in den bekannten Eintafelanlagen nicht moeglich, ohne wesentliche technische Eingriffe an der Anlage, Giessbleche mit unterschiedlichen Abmessungen (Breite - Laenge) einzusetzen.

Aus dem Dokument EP-A 0039514 (D1) ist eine Einrichtung fuer die Herstellung von gefrorenen Erzeugnissen, wie z.B. Speiseeis-Portionen, bekannt geworden.

In der bekannten Vorrichtung sind Formhohlraeume in eine bewegliche Platte eingebracht, wobei die Plattenenden formschluessig mit seitlich angeordneten Fuehrungsbahnen der Einrichtung verbunden sind.

Die Platten sind bei der bekannten Anlage also nicht frei aufliegend ausgestaltet, deshalb besteht bei der bekannten Anlage keine Moeglichkeit, die plattenartigen Bauteile von den Fuehrungen abzuheben oder um ihre Querachse zu drehen, um die Platten z.B. einem Ruettelvorgang oder einem Ausschlagvorgang, wie er in der Schokoladenindustrie erforderlich ist, auszusetzen.

Des weiteren besteht bei der bekannten Einrichtung keine Moeglichkeit, die Platten von den parallelen Fuehrungen abzunehmen, um diese Platten in Form eines Stapels, z.B. in eine Kuehlkammer einzufahren. Auch besteht bei den bekannten Platten keine Moeglichkeit, diese von den Fuehrungsbahnen der Anlage abzunehmen, durch Platten zu ersetzen, die andere Abmessungen oder unterschiedlich ausgebildete Formhohlraeume aufweisen.

Des weiteren sind in der Einrichtung nach D1 als Antriebsmittel zwei Gewindeschnecken vorgesehen, mit denen ueber Zusatzeinrichtungen, wie z.B. Fuehrungsteile und Pendelgehaenge, eine Lagerung der Giessplatten erfolgt.

Dadurch wird nicht nur der Fertigungsaufwand erheblich gesteigert, auch der Aufwand fuer die durchzufuehrenden Reinigungsarbeiten zur Aufrechterhaltung der gewuenschten hygienischen Gegebenheiten ist betraechtlich.

Aufgabe der vorstehenden Erfindung ist es, die Nachteile des Standes der Technik zu vermeiden und eine neue Eintafelanlage vorzuschlagen, die maximale Qualitaet fuer das fertige Produkt gewaehrleistet; eine weitere Aufgabe der Erfindung besteht darin, die bei der Verwendung von Transportketten auftretenden Nachteile zu vermeiden und den Aufbau der Antriebsmittel fuer die Bleche im hoechsten Grade zu vereinfachen und gleichzeitig die zur Durchfuehrung von Instandhaltungsarbeiten notwendigen Zeiten drastisch zu senken, wodurch eine Zunahme des Leistungsgrades der Anlage erreichbar ist; und weiter sollen mit der Erfindung Antriebsmittel vorgeschlagen werden, die eine genaue Fuehrung der Giessbleche zusammen mit einer ueberwachten Bewegung und einer Beschleunigung in der Bewegung der Giessbleche erlaubt und zu einer Verminderung des Energiebedarfs zum Foerdern der Giessbleche entlang der Foerderstrecke der Eintafelanlage fuehrt.

Die erfindungsgemaesse Aufgabe wird mit einer Eintafelanlage gelöst, die sich dadurch kennzeichnet, dass die Giessbleche mit den seitlichen Enden auf den parallelen Fuehrungen frei aufliegen, dass zwischen den parallelen Fuehrungen wenigstens eine Gewindeschnecke als Antriebsmittel vorgesehen ist, und dass von den Giessblechen Vorspruenge abstehen, die mit den Gaengen der Gewindeschnecke in Wirkverbindung stehen.

Bei Einsatz eines schneckenartig ausgebildeten Foerdermittels wird es ermoeglicht, fuer die Auflage der seitlichen Enden der Giessbleche sehr einfache Fuehrungsmittel zu verwenden, z.B. im Querschnitt runde Profile. Dies aufgrund der Tatsache, dass fuer die Giessbleche und die von den Giessblechen abstehenden Vorspruenge die Moeglichkeit besteht, eine sichere, formschluessige Verbindung zwischen Giessblech und Gewindeschnecke zu schaffen, was die Moeglichkeit eroeffnet, sehr schnelle Vorschubbewegungen sicher und genau mit den Giessblechen durchzufuehren.

Die Gewindeschnecke sowie die von den Giessblechen abstehenden Vorspruenge bestehen aus einem Material mit verminderten Reibwerten, deshalb kann auf die Verwendung von Schmier- und Gleitmitteln verzichtet werden, was dazu fuehrt, dass eine unerwuenschte Verseuchung des in die Giesshohlraeume der Bleche eingefuellten Materials unterbleibt.

Schliesslich koennen die Vorrichtungen zum Kuehlen des Erzeugnisses, die Einrichtungen zum Umstuerzen oder Drehen oder zum Umlenken, Anheben und Schlagen des Giessbleches, in ihrem konstruktiven Aufbau wegen der fehlenden Antriebsketten wesentlich vereinfacht werden.

Der Erfindungsgegenstand wird nun genauer beschrieben und anhand eines Ausfuehrungsbeispieles in den Zeichnungen dargestellt.

Es zeigen:
Fig. 1 in einer schematischen Draufsicht eine erfindungsgemaesse Eintafelanlage;
Fig. 2 ein Detail der Eintafelanlage in Draufsicht;
Fig. 2a in vergroessertem Massstab das Detail II nach Fig. 2;
Fig. 3 die Eintafelanlage in Vorderansicht;
Fig. 3a das Detail III nach Fig. 3 in vergroessertem Massstab;
Fig. 4 eine Draufsicht auf eine Wendevorrichtung, die in die Foerderstrecke der Eintafelanlage eingebaut ist;
Fig. 5 in Vorderansicht die Eintafelanlage;
Fig. 6 in vergroessertem Massstab die Gewindeschnecke zum Verschieben der Giessbleche;
Fig. 7 in Ansicht einige Giessbleche mit abstehenden Bauteilen, die mit den Gewindegaengen der Transportschnecke in Wirkverbindung stehen;
Fig. 8 schematisch die Antriebsschnecke fuer den Quertansport der Giessbleche in der Anlage;
Fig. 9 ein Detail der Quertransporteinrichtung;
Fig. 10 in perspektivischer Ansicht die Transportschnecke mit einem Giessblech.

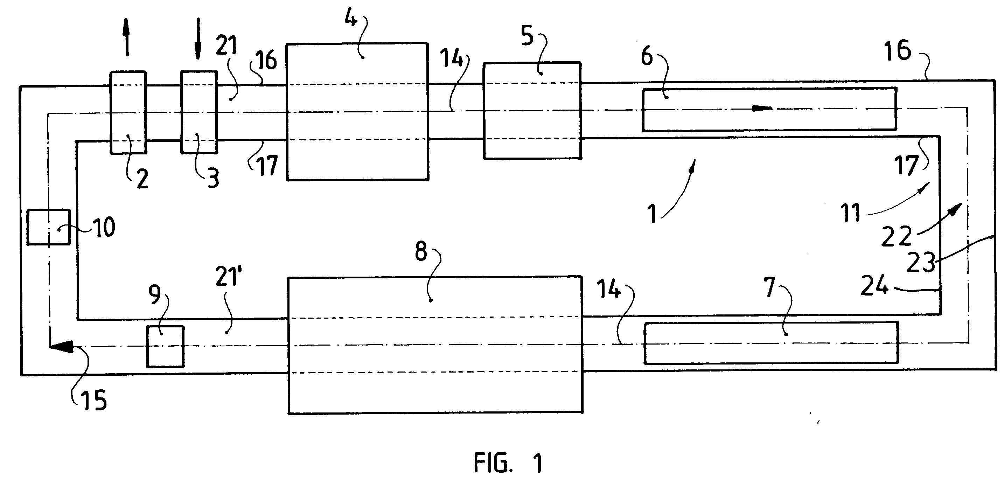

Wie der Fig. 1 zu entnehmen ist, weist die Eintafelanlage die gesamthaft mit 1 gekennzeichnet ist, eine Entladestation 2 fuer die Giessbleche sowie eine Station 3 zum Zufuehren der Giessbleche auf.

Mit 4 ist eine Aufwaermeeinrichtung fuer die Giessbleche gekennzeichnet, der eine Dosiereinrichtung 5 fuer das Zufuehren der fluessigen Schokolade sowie eine Schlagvorrichtung 6 zum Einebnen des eingegossenen Erzeugnisses folgt.

Der Vorrichtung 6 folgt eine weitere Schlagvorrichtung 7, der ein Kuehlschrank 8 folgt und am Auslauf des Kuehlschrankes 8 ist eine Wendevorrichtung 9 sowie eine bekannte Einrichtung 10 zum Ausrichten der Giessbleche vorgesehen.

All die bisher aufgefuehrten Einrichtungen arbeiten mit einer Foerderbahn 11 zusammen, die z.B. in Form eines geschlossenen Bahnringes vorgesehen ist.

Die Foerderbahn, die auch Laengen von mehreren 100 m erreichen kann, besteht aus parallel angeordneten Fuehrungsschienen 16 und 17, die die Giessbleche aufnehmen (in Fig. 1 sind die Giessbleche nicht dargestellt).

Die Giessbleche werden ueber mindestens eine Gewindeschnecke 14 bewegt, die zwischen den Fuehrungsschienen 16 und 17 vorgesehen ist.

An der mit 15 gekennzeichneten Stelle wird das Erzeugnis aus der Anlage ausgefahren; ein Ausfahren der Giessbleche erfolgt in der Zone 2.

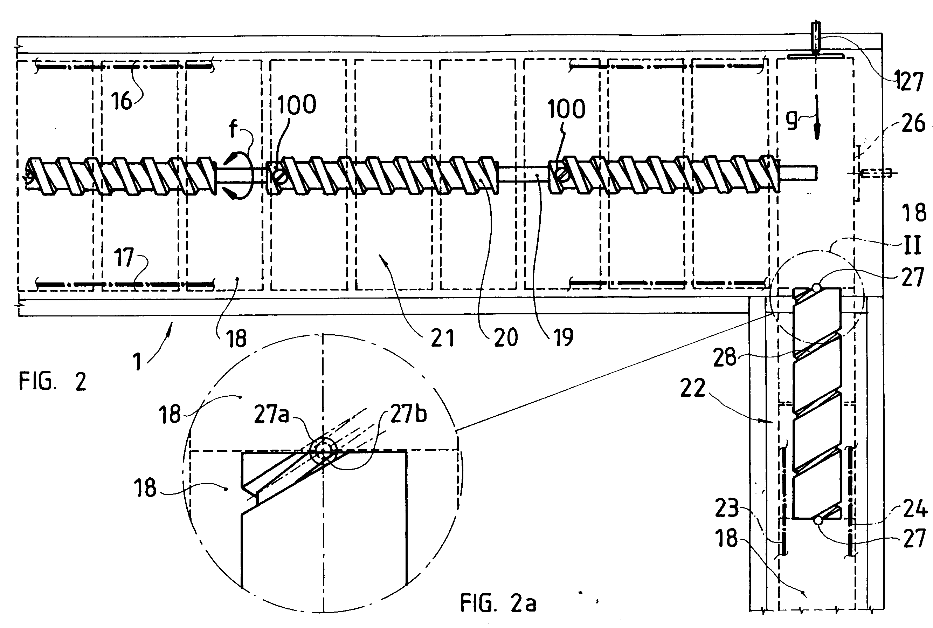

Wie der Fig. 2 zu entnehmen ist, weist die Eintafelanlage 1 seitliche Fuehrungsschienen 16 und 17 auf, und auf diesen Fuehrungsschienen liegen die Giessbleche 18, die in Fig. 2 nur schematisch angedeutet sind, mit ihren seitlichen Enden auf.

Zum Bewegen der Giessbleche 18 ist zwischen den Fuehrungschienen 16 und 17 der Eintafelanlage 1 eine Antriebswelle 19 vorgesehen die sich ueber die gesamte geradlinige Strecke der Eintafelanlage erstreckt. Die Antriebswelle 19 kann ueber einen bekannten Antrieb, z.B. ueber einen steuerbaren Elektromotor angetrieben werden. Die Drehbewegung der Welle 19, die in beiden Drehrichtungen erfolgen kann, ist schematisch durch den Pfeil (f) dargestellt.

Auf der Welle 19 sind geteilte Bauteile montiert, die geteilte Gewindeschnecken 20 bilden, welche in vorteilhafter Weise als austauschbare Bauteile vorgesehen sind.

In vorteilhafter Weise sind die Gewindeschnecken 20 aus Kunststoff hergestellt, wobei der Kunststoff einen hohen Widerstand gegen Abrieb und gute Gleiteigenschaften aufweist.

Um Verformungen, z.B. aufgrund von Temperaturschwankungen entgegenzuwirken, sind die Foerderschnecken 20 an der Antriebswelle 19 nur ueber ein Ende befestigt, z.B. unter Zuhilfenahme eines Gewindestiftes 100. Dadurch kann die Gewindeschnecke 20 uneingeschraenkte Laengsbewegungen infolge von Temperaturschwankungen durchfuehren.

Am Ende der Foerderstrecke 21, die von den parallelen Fuehrungsschienen 16 und 17 gebildet ist, ist eine weitere Foerderstrecke 22 vorgesehen, die senkrecht zur Foerderstrecke 21 angeordnet ist. Die Foerderstrecke 22 besteht aus Fuehrungsschienen 23 und 24, die die Laengsseiten der Giessbleche 18 aufnehmen. Auch in diesem Fall ist zwischen den parallel angeordneten Fuehrungsschienen 23 und 24, auf denen die Giessbleche 18 ruhen, eine Gewindeschnecke 25 fuer den Antrieb der Giessbleche gelagert. Am Ende der parallelen Fuehrungsschienen 16 und 17, die die Foerderstrecke 21 begrenzen, ist ein Anschlag 26 vorgesehen. Versetzt um 90° ist am Ende der Foerderstrecke 21 eine Verschiebeeinrichtung 127 angeordnet, z.B. eine Kolben-Zylindereinheit.

Wird der Kolbenzylindereinheit 127 ein Steuersignal zugefuehrt, das z.B. vom Anschlag 26 abgegeben wird, erfolgt eine Anzeige, die aufzeigt, dass ein Giessblech 18 in seine Endstellung gelangt ist, dies fuehrt zu einer Betaetigung der Kolben-Zylindereinheit 127, welche das Giessblech 18 in Querrichtung gemaess dem Pfeil (g) verschiebt.

Die Giessbleche 18 weisen an den schmäleren Seiten abstehende Vorspruenge 27 auf, die nach unten gerichtet sind.

Diese Vorspruenge 27 treten mit den Gewindegaengen 28 der Gewindeschnecke 25 der Foerderstrecke 22 in Wirkverbindung, somit werden die Giessbleche bei einer Drehbewegung der Foerderschnecke 25 in Querrichtung entlang den Fuehrungsschienen 23 und 24 gefoerdert.

Der Fig. 2a kann entnommen werden, dass in vorteilhafter Weise jedes Giessblech 18 an seinen Enden (Schmalseiten) einen Vorsprung aufweist, der die Form eines Halbkoerpers 27a bzw. 27b hat. Dadurch eroeffnet sich die Moeglichkeit, die Giessbleche entlang der Foerderstrecke 23, 24, die ohne Zusatzeinrichtungen zum Einwirken auf die Schokoladenmasse ist, in Querrichtung zu foerdern.

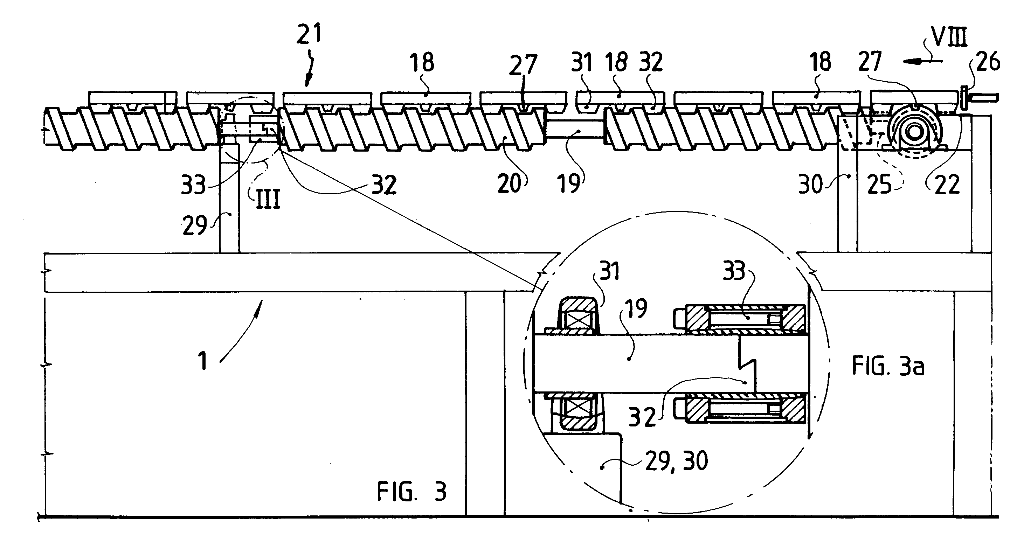

Der Fig. 3 kann in Ansicht die Foerderstrecke 21 sowie die quer dazu angeordnete Foerderstrecke 22 entnommen werden.

Wie der Zeichnung ferner zu entnehmen ist, ist der Aufbau der Eintafelanlage 1 ausgesprochen einfach und funktionssicher, da ausser den seitlichen Fuehrungsschienen zur Aufnahme der Giessbleche nur einfache Lagergestelle 29, 30 fuer die Aufnahme der Welle 19 sowie der Gewindeschnecke 20 vorzusehen sind.

Mit den Gaengen der Gewindeschnecken 20 stehen vom Blech abstehende Bauteile 31 und 32 in Wirkverbindung, diese Vorspruenge sind in vorteilhafter Weise in der Mitte des Giessbleches 16, in vorteilhafter Weise an dessen Vorder- und Rueckseite angeordnet.

Der Fig. 3 kann ferner entnommen werden, dass die Vorspruenge 27, die an den Enden des Giessbleches vorgesehen sind, bei Laengstransport (Foerderstrecke 21) der Giessbleche 18 nicht mit den Gaengen der Gewindeschnecke in Wirkverbindung treten.

Ferner kann der Fig 3 entnommen werden, dass die Vorspruenge 27 mit den Gaengen der Gewindeschnecke 25 lediglich bei einem Quertransport der Giessbleche 18 entlang der Foerderstrecke 22 in Wirkverbindung treten.

Der Fig. 3a kann entnommen werden, dass die Welle 19 in den Lagergestellen 29, 30, z.B. unter Zuhilfenahme eines Kugellagers 31, gelagert ist.

In vorteilhafter Weise ist die Antriebswelle 19 in mehrere Teilstuecke unterteilt, die miteinander ueber Profilstuecke oder Verbindungsstutzen zusammengefuegt sind und ueber ein Profil 32, aehnlich einem Schwalbenschwanzprofil, miteinander verbunden sind.

Um die Endstuecke der Welle 19 ueber das Profil 32 in Verbindung zu halten, werden die Enden der Welle 19 von einer elastisch ausgebildeten Muffe 33 umgeben, oder es findet ein bekannter, konisch ausgebildeter Verbindungssstutzen Einsatz.

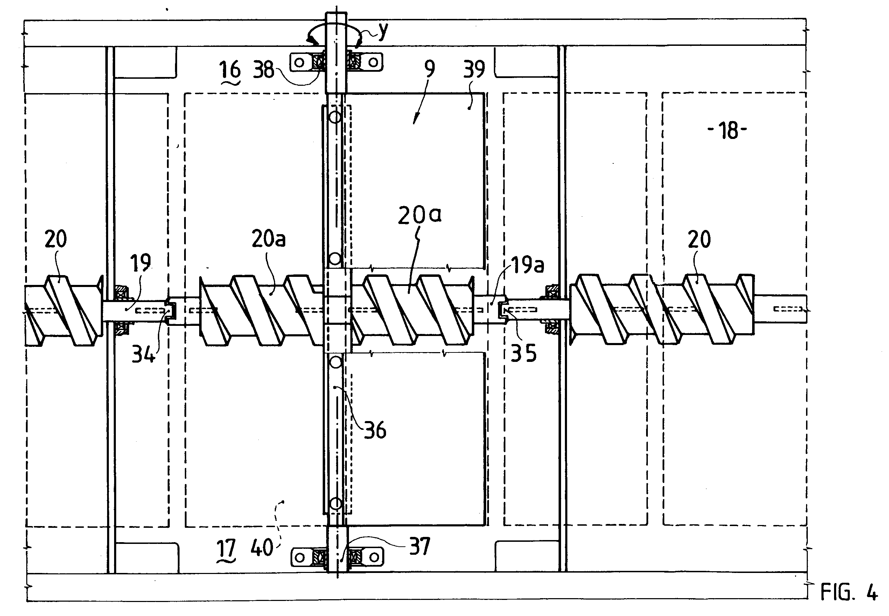

In Fig. 4 ist eine Wendevorrichtung dargestellt, die gesamthaft mit 9 gekennzeichnet ist und laengs der Transportstrecke 21' zwischen den Fuehrungsschienen 16 und 17 angeordnet ist.

Die Wendeeinrichtung besteht im wesentlichen aus einer Gewindeschnecke 20a, deren Welle 19a mit der Welle 19 der vorausgehenden Gewindeschnecke 20, sowie der nachfolgenden Gewindeschnecke ueber eine formschluessige Verbindung 34 bzw. 35 wirkverbunden ist.

Die Verbindung 34, 35 kann z.B. ueber ein federartiges sowie ein genutetes Endstueck hergestellt werden, wobei Zapfen und Nut in gegenseitige Wirkverbindung treten, aber auch ein gegenseitiges Loesen zwischen der Welle 19 und der Welle 19a, die die Gewindeschnecke 20a aufnimmt, moeglich wird.

Die Gewindeschnecke 20a ist verschwenkbar ueber eine Querstange 36 gelagert und die Querstange ist drehbar von Kugellagern 37 und 38 aufgenommen, die am Ende der Querstange 36 angeordnet sind und ausserhalb der von den Giessblechen 18 abgedeckten Flaeche montiert sind.

Mit der Questange 36 stehen Aufnahmebleche 39 und 40 in Wirkverbindung, diese Bleche sind zur Aufnahme der Giessbleche 18 vorgesehen.

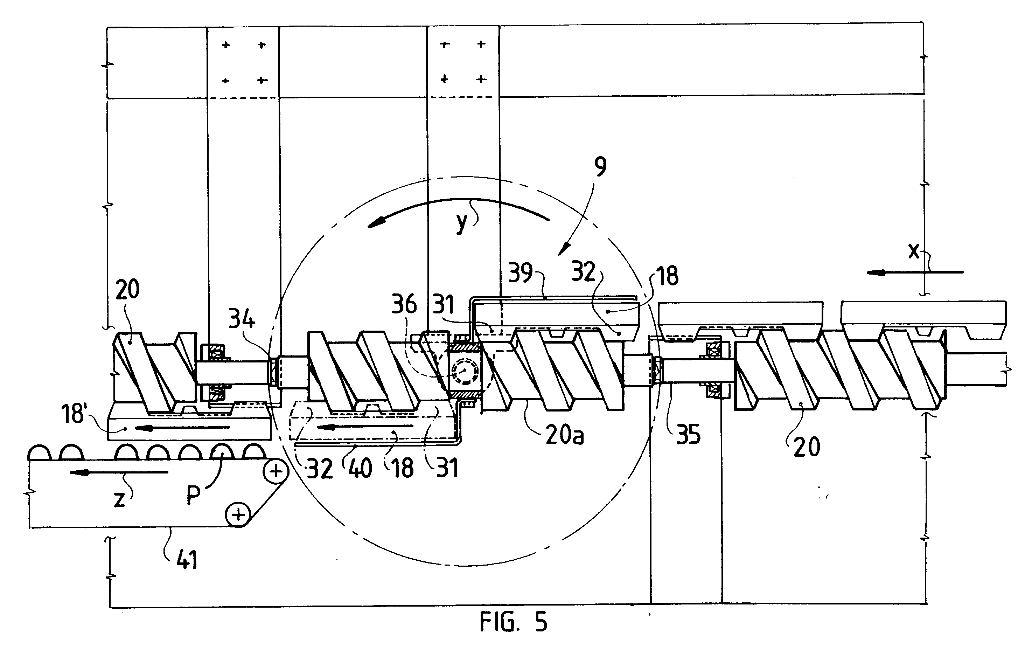

Der Fig. 5 kann die drehbare gelagerte Querstange entnommen werden. Die Querstange 36 ist vom Kernstueck der Gewindeschnecke 20a durchdrungen.

Die Querstange 36 nimmt die Aufnahmebleche 39 und 40 auf, welche kammerartige Raeume begrenzen, die zur Aufnahme der Giessbleche 18 dienen, die ueber die Gewindeschnecke 20 in Richtung des Pfeiles (X) angefoerdert werden.

Durch die Drehung der Wendevorrichtung 9 in Richtung des Pfeiles (X), wird das der vom Blech 39 begrenzten Kammer zugefuehrte Giessblech 18 unter Zuhilfenahme der Gewindeschnecke 20a verschwenkt, um in eine lagemaessig tiefere Stellung, wie in Fig. 5 dargestellt, verschwenkt zu werden.

Es ist darauf hinzuweisen, dass die Vorspruenge 31 und 32 des Giessbleches 18 auch waehrend der Durchfuehrung der Schwenkbewegung mit den Gaengen der Gewindeschnecke 20a in Wirkverbindung bleiben - dies auch nach Vollendung der Schwenkbewegung.

Unterhalb des gewendeten Giessbleches 18' (Giessblech 18', das bei umgestuerzter Lage unter Zuhilfenahme von nicht dargestellten Winkelprofilen gehalten wird) ist ein Foerderband 41 vorgesehen, auf dem die fertigen Erzeugnisse (P) abgelegt werden, um in der Eintafelanlage in der mit (Z) angegebenen Richtung verschoben zu werden.

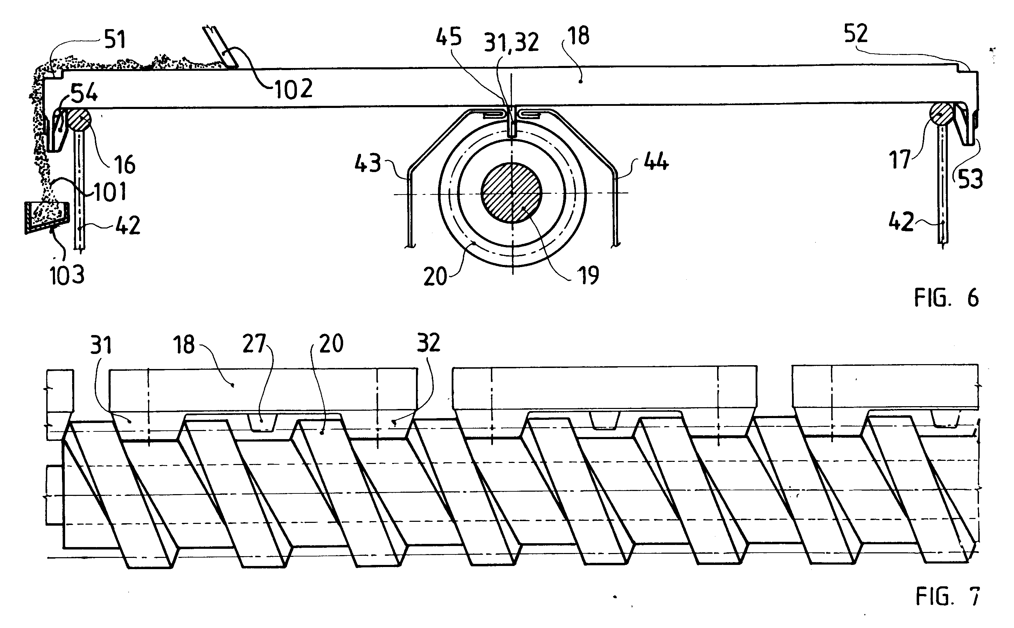

Der Fig. 6 kann ein Giessblech 18 entnommen werden, das auf Fuehrungsschienen 16 und 17 aufliegt. Ferner kann der Zeichnung die Welle 19 und die Gewindeschnecke 20 in Vorderansicht und teilweise im Schnitt entnommen werden.

Der Zeichnung kann auch entnommen werden, dass die Fuehrungsschienen 16 und 17 von einfachen Rundstaeben gebildet sind, die von Lagergestellen 42 aufgenommen werden.

Die Welle 19 sowie die Gewindeschnecke 20 sind vollstaendig durch eine Abdeckung, die von Blechbauteilen 43 und 44 gebildet ist, abgekapselt. An der Oberseite begrenzen die Blechbauteile einen schmalen Durchgangschlitz 45, der sehr eng gehalten ist, und in diesen Durchgangsschlitz 45 ragen die flachen Vorspruenge 31 und 32, die von der Unterseite des Giessbleches 18 abstehen, um mit den Gaengen der Gewindeschnecke 20 in Verbindung zu treten.

Die Abdeckungen 43, 44 bilden somit eine Auflage fuer das Giessblech 18 in der Mitte des Giessbleches, dies ist von besonderer Bedeutung um sicherzustellen, dass sehr lange Giessbleche, die nach dem Fuellen mit Schokoladenmasse sehr schwer sind, gestuetzt aufliegen.

Durch das vollstaendige Abdecken der sich drehenden Bauteile 19, 20 wird jegliche Unfallgefahr vermieden und ferner wird auch vermieden, dass sich Staub und Schmutz in unverwuenschter Weise auf den Gaengen der Gewindeschnecke 20 absetzen. Damit wird ein Verseuchen durch Bakterien ausgeschlossen.

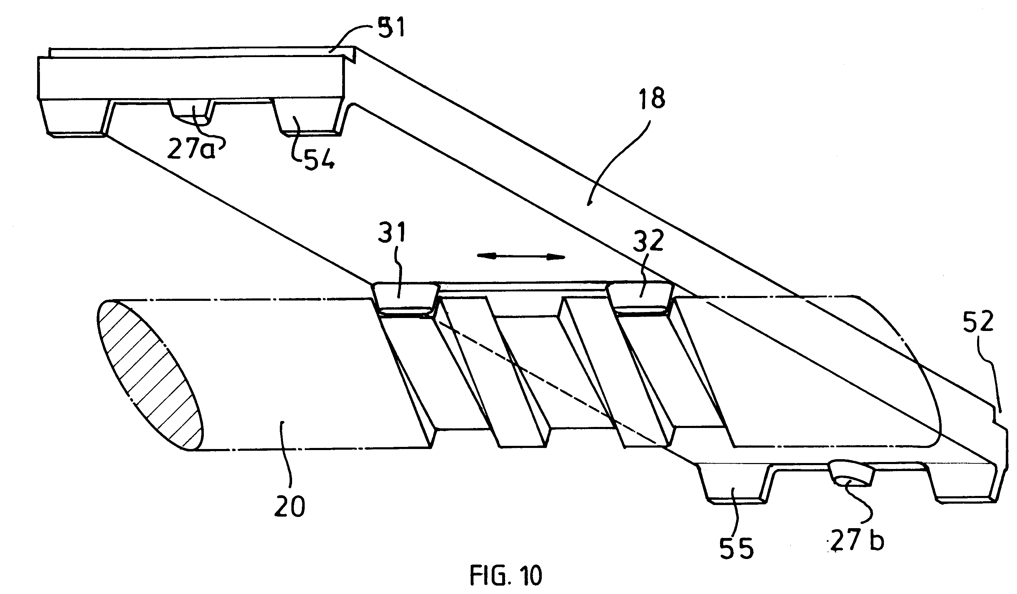

Mit besonderem Vorteil, wie besonders der Darstellung nach Fig. 6 (und Fig. 10) zu entnehmen ist, weist das Giessblech 18 an seiner Oberseite stufenfoermige Ausnehmungen 51 und 52 auf, an seiner Unterseite sind abstehende Rippen 53 und 54 vorgesehen.

Diese besondere Ausbildung der Giessbleche hat sich als besonders vorteilhaft erwiesen, wenn z.B. leere oder gefuellte Giessbleche 18 gestapelt werden muessen. In diesem Fall treten die abstehenen Rippen 53, 54 eines oben liegenden Giessbleches in die stufenfoermigen Ausnehmungen 51, 52 eines darunter liegenden Giessbleches ein. Durch diese Massnahme wird die Stabilitaet des aus Giessblechen 18 bestehenden Stapels wesentlich verbessert. Was die Lagerung des Giessblechstapels als auch den Transport des Giessblechstapels in vertikaler Richtung, z.B. in einem Kuehlschrank, wesentlich vereinfacht.

Ferner bilden die abstehenden Rippen 53, 54 Fuehrungsmittel gegenueber den parallelen Fuehrungsschienen 16, 17. Die Fuehrungsschienen 16, 17 werden von den Rippen 53, 54 abgedeckt oder abgeschirmt, was sich vorteilhaft waehrend des Einfuellvorganges des Erzeugnisses 101 auswirkt, z.B. wenn mit einer Schaberklinge 102 Schokoladenmasse vom Giessblech 18 abgespachtelt wird und von Rinnen 103 aufgenommen wird, die in vorteilhafter Weise entlang den Fuehrungen 16 und 17 angeordnet sind.

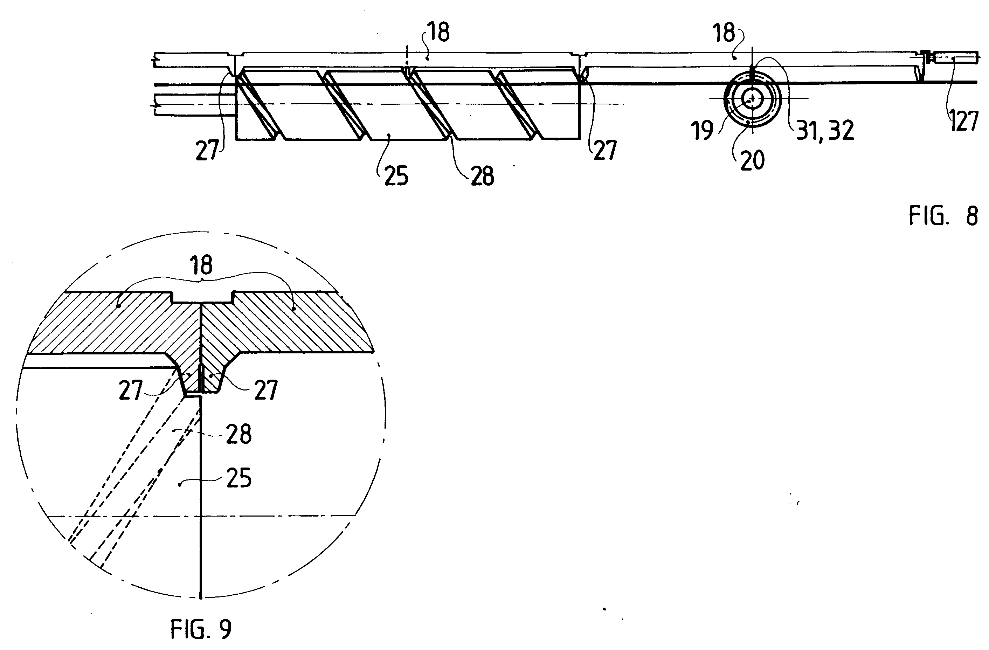

Der Fig. 7 kann ferner entnommen werden, dass die Vorspruenge 27 nicht mit den Gewindegaengen 20 in Verbindung treten, wenn die Giessbleche 18 entlang der Hauptfoerderstrecken (21, 21') bewegt werden, d.h. entlang einer Foerderstecke, entlang der die Behandlung des Giessbleches 18 bzw. des Schokoladenproduktes erfolgt.

Fig. 8 zeigt die Eintafelanlage in Ansicht in Richtung des Pfeiles VIII in Fig. 3.

Deutlich kann man die Kolben-Zylindereinheit 127 der Zeichnung entnehmen. Diese Einrichtung wirkt auf das Giessblech 18 ein, das von der Gewindeschnecke 20 bewegt wird, die von der Welle 19 angetrieben wurde. Die Schubbewebung der Kolben-Zylindereinheit 127, die auf das Giessblech 18 uebertragen wird, bewirkt, dass das Giessblech nach Freigabe des Vorsprunges 31, 32 von der Gewindeschnecke 20, durch die Gewindegaenge 28 der Schraube 25 erfasst wird.

Man kann den Zeichnungen entnehmen, dass die Vorspruenge 27 an den Endseiten des Giessbleches 18 formschluessig mit den Gewindegaengen 28 der sich drehenden Schraube 25 in Wirkverbindung treten. Dieser Tatbestand kann mit groesster Deutlichkeit der Fig. 9 entnommen werden, die diesen Sachverhalt in vergroessertem Massstab darstellt.

Der Fig. 9 kann in Ansicht die Schraube 25 mit den Gewindegaengen 28 entnommen werden, mit welchen die in der Mitte der Schmalseite des Giessbleches 18 vorgesehenen Vorspruenge 27 in Wirkverbindung treten. Die Arbeitsweise der erfindungsgemaessen Anlage ist folgende:

In der Station 3 zum Zufuehren der Giessbleche 18 werden die Bleche der Foerderstrecke 21, die seitliche Fuehrungen 16 und 17 zur Aufnahme und zum Transport der Giessbleche aufweist, zugefuehrt. Sobald die Giessbleche 18 auf den Fuehrungsschienen 16 und 17 angeordnet sind, treten die Vorspruenge 31, 32 eines jeden Giessbleches 18 mit den Gaengen 20 der Gewindeschnecke, die ueber die Welle 19 angetrieben wird, in Wirkverbindung.

Daraus folgt, dass die Giessbleche, die mit ihren Enden auf den Fuehrungsschienen 16, 17 aufliegen, sicher durch die Vorrichtung 4 gefuehrt werden. Die Vorrichtung 4 ist zum Erwaermen der Giessbleche vorgesehen. Im Anschluss daran durchlaufen die Giessbleche die Vorrichtung 5, in der das Einfuellen der Schokoladenmasse in die Hohlraeume der Giessbleche 18 erfolgt, um anschliessend eine mit 6 gekennzeichnete Schlag- oder Ruettelstation zu durchlaufen.

Am Ende der Foerderstrecke 21 treten die Giessbleche mit einem Anschlag 26 in Wirkverbindung, der die Endlage des Giessbleches festlegt. Der Anschlag 26 gibt ein Steuersignal ab, ueber das die Kolben-Zylindereinheit 127 angetrieben wird, um das Giessblech 18, dessen Vorspruenge 31 und 32 in der Zwischenzeit aus den Gewindegaengen der Gewindeschnecke 20 ausgetreten sind, auf eine Schraube 25 zuzuschieben, die in der querliegenden Foerderstrecke 22 vorgesehen sind, die senkrecht zur der Foerderstrecke 21 angeordnet sind.

Dank der Schubbewegung, die ueber die Kolben-Zylindereinheit 127 auf das Giessblech 18 ausgeuebt wird, treten die mittig angordneten Vorspruenge 27 mit den Gaengen 28 der Schraube 25 in Wirkverbindung und es erfolgt ein Transport der Foerderstrecke 21.

Am Ende der Foerderstrecke 22 ist eine weitere Vorrichtung vorgesehen, die dazu dient, das Giessblech in Richtung der Foerderbahn 21' (siehe Fig. 1) zu verschieben. Beim Durchlaufen dieser Foerderstrecke durchlaufen die Giessbleche eine Schlageinrichtung, um anschliessend in eine Kuehlanlage 8 einzutreten. Am Ausgang der Kuehlanlage ist eine Wendevorrichtung 9 dargestellt, deren Aufbau genauer in den Figuren 4 und 5 dargestellt ist.

Im Anschluss, nach einer weiteren Umlenkung der Giessbleche, durchlaufen diese eine Einrichtung zum lagemaessigen Ausrichten der Giessbleche, um anschliessend in eine Vorrichtung 2 zum Entladen der Giessbleche einzulaufen.

Selbstverstaendlich sind die Hilfsvorrichtungen 2, 3, 4, 5, 6, 7, 8, 9 und 10 auch in einer anderen Anordnung oder in einer anderen Reihenfolge gegenueber den Foerderstrecken 21, 22 und 21' anordenbar.

Die Bahnen 21, 22, 21' koennen sowohl in einer horizontalen Ebene als auch in einer vertikalen Ebene verlaufen.

Dank der Verwendung einer Gewindeschnecke oder Schraube als Foerdermittel fuer die Giessbleche erfolgt der Vorschub der Giessbleche mit sehr hoher Genauigkeit und dadurch kann der Fuellvorgang der Giessbleche genauer und mit weniger Ausschuss erfolgen.

Die Giessbleche 18 koennen auch sehr hohen Beschleunigungen ausgesetzt werden, um somit die Leistungsfaehigkeit der Anlage zu steigern.

Dies ist moeglich aufgrund der Vorsehung von Foerderschrauben, die ein Foerdern der Giessbleche 18 gleichzeitig mit einer Fuehrung (aufgrund des Formschlusses zwischen Giessblech und Gewindeschnecke) ermoeglichen.

Durch Verwendung einer Gewindeschnecke als Foerdermittel wird es nicht erforderlich sein, periodische Einstell- oder Instandhaltungsarbeiten durchzufuehen, denn der Verschleiss der zwischen Foerderschnecke und vom Giessblech abstehenden Vorspruengen eintritt, ist nicht so ausgepraegt, dass die gute Funktionstuechtigkeit der Vorschubeinrichtung in Frage gestellt werden koennte.

Des weiteren wird sich der auftretende Verschleiss nicht summieren, wie das bei Verwendung einer Transportkette der Fall ist.

Bei Verwendung einer Gewindeschnecke als Foerdermittel ist es moeglich, eine wesentlich einfachere Anlage, die auch sehr strengen hygienischen Bestimmungen entspricht, zu schaffen, denn es wird nicht notwendig sein, die Foerderschnecke zu schmieren. Ferner koennen Reinigungsarbeiten der Anlage kontinuierlich und mit groesserem Wirkungsgrad durchgefuehrt werden.

Besonders vorteilhaft ist es ferner, dank der Verwendung einer Gewindeschnecke als Foerdermittel fuer die Giessbleche, dass in einer Eintafelanlage fuer Schokolade oder aehnliche Produkte der Antrieb von Giessblechen, sowohl in Vorwaertsrichtung als auch in Rueckwaertsrichtung als auch nach rechts oder nach links und nach oben oder nach unten moeglich ist.

Des weiteren wird es moeglich sein, die Giessbleche um 180° unter Formschluss zu wenden und dies unter Verwendung einer einfachen Wendevorrichtung. Es ist auch moeglich, ohne einen mechanischen Eingriff an der Anlage vorzunehmen, Giessbleche mit unterschiedlichen Abmessungen einzusetzen.

Nach dem Wendevorgang des mit dem Erzeugnis gefuellten Giessbleches wird das entleerte Giessblech sicher in seiner Lage gehalten, denn waehrend des Wendevorganges bleibt das Giessblech mit der Gewindeschnecke formschluessig wirkverbunden.

Ferner wird es moeglich, das Giessblech waehrend des Schwenkvorganges in seiner genauen Lage durch Vorsehung von Halteblechen zu lagern, Haltebleche, die eine Aufnahme fuer die Halterung des Giessbleches waehrend der Schwenkbewegung bilden.

Die Verwendung einer Gewindeschnecke erlaubt es ferner, die gesamte Eintafelanlage flexibler zu gestalten, da die Giessbleche oder die zusaetzlichen Einrichtungen an jeder Stelle der Foerderstrecke zugefuehrt oder vorgesehen werden koennen. Es ist nicht notwendig, auf Foerderketten sowie auf die dafuer erforderlichen Fuehrungen und Umlenkraeder Ruecksicht zu nehmen.

## Patentansprüche

1. Eintafelanlage (1) fuer Schokolade oder aehnliche Produkte, mit Giessblechen (18), die Hohlraeume zur Aufnahme des einzutafelnden Produktes aufweisen, und einer Foerderstrecke (21, 21', 22), wobei die Giesssbleche entlang der Foerderstrecke (21, 21', 22) bewegbar sind, und die Foerderstrecke von parallelen Fuehrungen (16, 17) begrenzt wird,
**dadurch gekennzeichnet**,
dass die Giessbleche (18) mit den seitlichen Enden auf den parallelen Fuehrungen (16, 17) frei aufliegen,
dass zwischen den parallelen Fuehrungen wenigstens eine Gewindeschnecke (20) als Antriebsmittel vorgesehen ist, und dass von den Giessblechen (18) Vorspruenge (31, 32) abstehen, die mit den Gaengen der Gewindeschnecke (20) in Wirkverbindung stehen.

2. Eintafelanlage nach Patentanspruch 1, **dadurch gekennzeichnet,** dass eine Antriebswelle (19) der Gewindeschnecke (20) mit einer Einrichtung zur gesteuerten Drehbewegung verbunden ist und die Drehbewegung der Welle (19) in beiden Richtungen (f) durchfuehrbar ist.

3. Eintafelanlage nach Patentanspruch 1, **dadurch gekennzeichnet**, dass die Gewindeschnecke (20) fuer den Vorschub der Giessbleche (18) auf der Antriebswelle (19) von getrennten Koerpern gebildet ist, und jeder Koerper, der eine Antriebsschnecke (20) bildet, an der Antriebswelle (19) an nur einem Ende (100) der Antriebsschnecke (20) befestigt ist.

4. Eintafelanlage nach Patentanspruch 1, **dadurch** gekennzeichnet, dass am Ende der parallelen Fuehrungen (16, 17) fuer den Vorschub der Giessbleche (18), Halteanschlaege (26) vorgesehen sind, die bei Betaetigung Steuersignale abgeben, die einer Einrichtung fuer den Quervorschub der Bleche (18), bestehend aus einer Kolben-Zylindereinheit, (27) zugefuehrt werden.

5. Eintafelanlage nach Patentanspruch 1, **dadurch gekennzeichnet**, dass in der Wendevorrichtung (9) der Giessbleche (18) die Vorschubschnecke (20a) von einer Welle (19a) aufgenommen ist, deren Enden mit den Endstuecken der nebeneinanderliegenden Antriebswellen (19) verbindbar und loesbar ausgebildet sind, und dass die Gewindeschnecke (20a) schwenkbar auf einer Querstange (36) angeordnet ist und die Abschnitte der Gewindeschnecke (20a) der Schwenkvorrichtung (9) an ihren gegenueberliegenden Seiten durch Bleche (39, 40) abgedeckt sind, die Kammern zur Aufnahme der Giessbleche (18) bilden.

6. Eintafelanlage nach Patentanspruch 1, **dadurch gekennzeichnet,** dass die Foerderschnecke (20) in horizontaler Lage angeordnet ist.

7. Eintafelanlage nach Patentanspruch 1, **dadurch gekennzeichnet,** dass die Foerderschnecke (20) in vertikaler Lage angeordnet ist.

8. Eintafelanlage nach Patentanspruch 1, **dadurch gekennzeichnet,** dass die Antriebswelle (19) und die Foerderschnecke (20) durch eine aus Abdeckblechen gebildete Abdeckung (43, 44) geschuetzt ist und diese Abdeckung an ihrer Oberseite einen Schlitz (45) begrenzt, und durch den Schlitz vom Giessblech (18) die abstehende Vorspruenge (31, 32) ragen.

9. Giessblech fuer eine Eintafelanlage nach Patentanspruch 1, **dadurch gekennzeichnet,** dass die Vorspruenge (31, 32, 27a, 27b) vom Koerper des Giessbleches (18) abstehen.

10. Giessblech nach Patentanspruch 8, **dadurch gekennzeichnet,** dass die Vorspruenge (31, 32) in der Mitte des Giessbleches (18) und in Richtung der groesseren Laengenerstreckung des Giessbleches (18) angeordnet sind.

11. Giessblech nach Patentanspruch 8, **dadurch gekennzeichnet,** dass die Vorspruenge (27a, 27b) in der Mitte des Giessbleches (18) und an den Schmalseiten des Bleches angeordnet sind.

12. Giessblech nach Patentanspruch 10, **dadurch gekennzeichnet,** dass die Vorspruenge (27a, 27b), die von der Schmalseite der Giessbleche (18) abstehen, als Halbkoerper ausgebildet sind.

13. Giessblech nach Patentanspruch 8, **dadurch gekennzeichnet,** dass auf der Schmalseite des Giessbleches (18) stufenfoermige Ausnehmungen (51, 52) vorgesehen sind, welche Aufnahmen fuer Rippen (54, 55) bilden, die von der Unterseite des Giessbleches abstehen, und dass die Rippen (54, 55) Fuehrungsmittel bilden, die die Fuehrungen (16, 17) auf ihrer Aussenseite abdecken und umgreifen.

## Claims

1. Installation (1) for manufacturing chocolate bars or similar products, having casting plates (18), which have cavities for receiving the product to be made into bars, and a conveying section (21, 21', 22), the casting plates being movable along the conveying section (21, 21', 22), and the conveying section being bounded by parallel guides (16, 17), characterized in that the casting plates (18) are freely supported by the lateral ends on the parallel guides (16, 17), in that at least one worm (20) is provided between the parallel guides as a driving means, and in that projections (31, 32) protrude from the casting plates (18), which projections are operatively connected to the threads of the worm (20).

2. Installation for manufacturing bars according to Patent Claim 1, characterized in that a drive shaft (19) of the worm (20) is connected to a device for controlled rotational movement, and the rotational movement of the shaft (19) can be carried out in both directions (f).

3. Installation for manufacturing bars according to Patent Claim 1, characterized in that the worm (20) for advancing the casting plates (18) along the drive shaft (19) is formed by separate bodies, and each body, which forms a drive worm (20), is fastened to the drive shaft (19) at only one end (100) of the drive worm (20).

4. Installation for manufacturing bars according to Patent Claim 1, characterized in that retaining stops (26) are provided at the end of the parallel guides (16, 17) for advancing the casting plates (18), which retaining stops, when actuated, emit control signals which are fed to a device, comprising a piston-cylinder unit (27), for the transverse advance of the plates (18).

5. Installation for manufacturing bars according to Patent Claim 1, characterized in that in the turning device (9) of the casting plates (18), the advancing worm (20a) is held by a shaft (19a) whose ends are designed such that they can be connected to, and detached from, the end pieces of the drive shafts (19) lying next to one another, and in that the worm (20a) is arranged pivotably on a transverse rod (36) and the sections of the worm (20a) of the pivoting device (9) are covered at their opposite sides by plates (39, 40) which form chambers to hold the casting plates (18).

6. Installation for manufacturing bars according to Patent Claim 1, characterized in that the conveying worm (20) is arranged in a horizontal position.

7. Installation for manufacturing bars according to Patent Claim 1, characterized in that the conveying worm (20) is arranged in a vertical position.

8. Installation for manufacturing bars according to Patent Claim 1, characterized in that the drive shaft (19) and the conveying worm (20) are protected by a cover (43, 44) formed by covering plates, and the upper side of this cover bounds a slot (45), and the protruding projections (31, 32) jut through the slot of the casting plate (18).

9. Casting plate for an installation for manufacturing bars according to Patent Claim 1, characterized in that the projections (31, 32, 27a, 27b) protrude from the body of the casting plate (18).

10. Casting plate according to Patent Claim 8, characterized in that the projections (31, 32) are arranged in the centre of the casting plate (18) and in the direction of the relatively large longitudinal extent of the casting plate (18).

11. Casting plate according to Patent Claim 8, characterized in that the projections (27a, 27b) are arranged in the centre of the casting plate (18) and on the narrow sides of the plate.

12. Casting plate according to Patent Claim 10, characterized in that the projections (27a, 27b), which protrude from the narrow side of the casting plates (18), are designed as half-bodies.

13. Casting plate according to Patent Claim 8, characterized in that step-shaped recesses (51, 52) are provided on the narrow side of the casting plate (18), which recesses form receptacles for ribs (54, 55) which protrude from the lower side of the casting plate, and in that the ribs (54, 55) form guide means which cover, and engage around, the outside of the guides (16, 17).

## Revendications

1. Installation de mise en tablette (1) pour du chocolat ou des produits similaires, avec des tôles de coulée (18) qui présentent des espaces creux pour recevoir le produit à mettre en tablette et un trajet de convoyage (21, 21', 22), où les tôles de coulée sont déplaçables le long du trajet de convoyage (21, 21', 22) et où le trajet de convoyage est délimité par des guidages parallèles (16, 17), **caractérisée en ce que** les tôles de coulée (18) reposent librement avec les extrémités latérales sur les guidages parallèles (16, 17), en ce qu'il est prévu entre les guidages parallèles au moins une vis filetée (20) comme moyen d'entraînement et en ce que des tôles de coulée (18) dépassent des saillies (31, 32) qui sont en liaison active avec les pas de la vis de filetage (20).

2. Installation de mise en tablette selon la revendication 1, **caractérisée en ce qu'**un arbre menant (19) de la vis de flletage (20) est relié à un dispositif pour le mouvement de rotation commandé et que le mouvement de rotation de l'arbre (19) peut être exécuté dans les deux directions (f).

3. Installation de mise en tablette selon la revendication 1, **caractérisée en ce que** la vis de filetage (20) est réalisée pour la poussée vers l'avant des tôles de coulée (18) sur l'arbre menant (19) de corps séparés, et que chaque corps qui forme une vis d'entraînement (20) est fixé à l'arbre menant (19) à seulement une extrémité (100) de la vis d'entraînement (20).

4. Installation de mise en tablette selon la revendication 1, **caractérisée en ce que** sont prévues à l'extrémité des guidages parallèles (16, 17), pour la poussée vers l'avant des tôles de coulée (18), des butées de retenue (26) qui, lors de l'actionnement, émettent des signaux de commande qui sont transmis à un dispositif pour la poussée transversale des tôles (18), constitué d'une unité à piston et à cylindre (27).

5. Installation de mise en tablette selon la revendication 1, **caractérisée en ce qu'**il est reçu dans le dispositif de retournement (9) des tôles de coulée (18) la vis de poussée (20a) d'un arbre (19a), dont les extrémités sont réalisées pour pouvoir être reliées avec et libérées des pièces d'extrémité des arbres d'entraînement avoisinants (19) et en ce que la vis de filetage (20a) est disposée d'une manière pivotante sur une tige transversale (36), et que les tronçons de la vis de filetage (20a) du dispositif de pivotement (9) sont recouverts à leurs côtés opposés par des tôles (39, 40) qui forment des chambres pour recevoir les tôles de coulée (18).

6. Installation de mise en tablette selon la revendication 1, **caractérisée en ce que** la vis de convoyage (20) est disposée dans une position horizontale.

7. Installation de mise en tablette selon la revendication 1, **caractérisée en ce que** la vis de convoyage (20) est disposée dans la position verticale.

8. Installation de mise en tablette selon la revendication 1, **caractérisée en ce que** l'arbre d'entraînement (19) et la vis de convoyage (20) sont protégés par un recouvrement (43, 44) formé de tôles de recouvrement, et que ce recouvrement délimite à son côté supérieur une fente (45), et que les saillies (31, 32) dépassant de la tôle de coulée (18) font saillie à travers la fente.

9. Tôle de coulée pour une installation de mise en tablette selon la revendication 1, **caractérisée en ce que** les saillies (31, 32, 27a, 27b) dépassent du corps de la tôle de coulée (18).

10. Tôle de coulée selon la revendication 8, **caractérisée en ce que** les saillies (31, 32) sont disposées au milieu de la tôle de coulée (18) et en direction de la plus grande extension en longueur de la tôle de coulée (18).

11. Tôle de coulée selon la revendication 8, **caractérisée en ce que** les salles (27a, 27b) sont disposées au milieu de la tôle de coulée (18) et aux côtés étroits de la tôle.

12. Tôle de coulée selon la revendication 10, **caractérisée en ce que** les salles (27a, 27b) qui dépassent du côté étroit des tôles de coulée (18) sont réalisées sous forme de corps creux.

13. Tôle de coulée selon la revendication 8, **caractérisée en ce que** sont prévus sur le côté étroit de la tôle de coulée (18) des évidements étagés (51, 52) qui forment des logements pour des nervures (54, 55) qui dépassent du côté inférieur de la tôle de coulée, et que les nervures (54, 55) forment des moyens de guidage qui recouvrent et entourent les guidages (16, 17) sur leur côté extérieur.
